# EUROPEAN PATENT APPLICATION

(11) **EP 2 123 933 A2**
(43) Date of publication of application: **25.11.2009**
(21) Application number: 09251084.1
(22) Date of filing: 09.04.2009
(51) Int. Cl.: F16F 9/46

(54) **Shock absorber and vehicle**

(30) Priority: 19.05.2008 JP 2008130971
(71) Applicant: Yamaha Hatsudoki Kabushiki Kaisha, Iwata-shi, Shizuoka 438-8501 (JP)
(72) Inventor: Hayashi, Masao, Iwata-shi, Shizuoka-ken 438-8501 (JP)
(74) Representative: Lamb, Martin John Carstairs

(57) **Abstract**

A shock absorber (41) includes a cylinder having an internal space formed therein and a piston (43) arranged in the internal space for partitioning the internal space into a compression-side oil chamber (44) and an extension-side oil chamber (45). A first oil chamber (46) is connected to the extension-side oil chamber (45). A second oil chamber (47) is connected to a compression-side oil chamber (44). A first valve (50) only allows the hydraulic oil to flow from the first oil chamber (46) into a third oil chamber (48). A second check valve (51) only allows the hydraulic oil to flow from the second oil chamber (47) into the third oil chamber (48). A damping force generating valve (54) only allows the hydraulic oil to flow from the third oil chamber (48) into a fourth oil chamber (49). The damping force generating valve (54) generates a flowing resistance when the hydraulic oil flows from the third oil chamber (48) into the fourth oil chamber (49). A third check valve (52) only allows the hydraulic oil to flow from the fourth oil chamber (49) into the first oil chamber (46). A fourth check valve (53) only allows the hydraulic oil to flow from the fourth oil chamber (49) into the second oil chamber (47).

## Description

### FIELD OF THE INVENTION

The present invention relates to a shock absorber and a vehicle having the same.

### BACKGROUND TO THE INVENTION

It has been proposed in the art to provide a shock absorber having only one control valve device used commonly for expansion and compression to reduce the size of the shock absorber. Such an arrangement is disclosed in, for example, JP-A-05-018431.

Fig. 11 is a cross-sectional view of a shock absorber 100 disclosed in JP-A-05-018431. As shown in Fig. 11, the shock absorber 100 includes an inner cylinder 110. A piston 111 is arranged in the interior of the inner cylinder 110. The internal space of the inner cylinder 110 is partitioned into a first main oil chamber 101 and a second main oil chamber 102 by the piston 111.

The piston 111 is formed with a communication hole 111a. The first main oil chamber 101 and the second main oil chamber 102 are connected by the communication hole 111a. An one-way valve 103 is arranged in the communication hole 111a. The one-way valve 103 allows hydraulic oil to flow from the first main oil chamber 101 into the second main oil chamber 102, while restrains or prevents the hydraulic oil from flowing from the second main oil chamber 102 into the first main oil chamber 101.

The first main oil chamber 101 is connected to a reservoir 104. An one-way valve 105 is arranged between the reservoir 104 and the first main oil chamber 101. The one-way valve 105 allows the hydraulic oil to flow from the reservoir 104 into the first main oil chamber 101, while restrains or prevents the hydraulic oil from flowing from the first main oil chamber 101 into the reservoir 104.

The reservoir 104 is connected to the second main oil chamber 102 by a diversion 106. A control valve unit 107 is arranged in the diversion 106. The control valve unit 107 provides a flowing resistance to the hydraulic oil passing through the control valve unit 107.

In the shock absorber 100, when the shock absorber 100 is compressed, the hydraulic oil passes through the communication hole 111a formed in the piston 111, and is moved from the first main oil chamber 101 to the second main oil chamber 102.

As described above, with the shock absorber 100 disclosed in JP-A-05-018431, the communication hole 111a is necessary for allowing communication of hydraulic oil when the shock absorber 100 is compressed in the piston 111. Therefore, the piston 111 has a tendency to be upsized. Therefore, the shock absorber 100 has a tendency to upsize by an extent corresponding to the upsizing of the piston 111.

In view of such circumstances, it is an object of the present invention to provide a shock absorber which is compact and is able to achieve a high damping force.

### SUMMARY OF THE INVENTION

A shock absorber according to an aspect of the present invention is a shock absorber of an oil type. The shock absorber according to the present invention includes a cylinder and a piston. The cylinder is formed with an internal space of the cylinder. The piston is arranged in the internal space of the cylinder. The piston partitions the internal space of the cylinder into a compression-side main oil chamber and an extension-side main oil chamber. The shock absorber according to the present invention is formed with a first oil chamber, a second oil chamber, a third oil chamber, and a fourth oil chamber. The first oil chamber is connected to the extension-side main oil chamber. The second oil chamber is connected to the compression-side main oil chamber. The shock absorber according to the present invention includes a first valve, a second valve, a damping force generating valve, a third valve, and a fourth valve. The first valve is arranged between the first oil chamber and the third oil chamber. The first valve allows hydraulic oil to flow from the first oil chamber into the third oil chamber. The first valve restrains the hydraulic oil from flowing from the third oil chamber into the first oil chamber. The second valve is arranged between the second oil chamber and the third oil chamber. The second valve allows the hydraulic oil to flow from the second oil chamber into the third oil chamber. The second valve restrains the hydraulic oil from flowing from the third oil chamber into the second oil chamber. The damping force generating valve is arranged between the third oil chamber and the fourth oil chamber. The damping force generating valve allows the hydraulic oil to flow from the third oil chamber into the fourth oil chamber. The damping force generating valve restrains the hydraulic oil from flowing from the fourth oil chamber into the third oil chamber. The damping force generating valve generates a flowing resistance when the hydraulic oil flows from the third oil chamber into the fourth oil chamber. The third valve is arranged between the first oil chamber and the fourth oil chamber. The third valve allows the hydraulic oil to flow from the fourth oil chamber into the first oil chamber. The third valve restrains the hydraulic oil from flowing from the first oil chamber into the fourth oil chamber. The fourth valve is arranged between the second oil chamber and the fourth oil chamber. The fourth valve allows the hydraulic oil to flow from the fourth oil chamber into the second oil chamber. The fourth valve restrains the hydraulic oil from flowing from the second oil chamber into the fourth oil chamber.

According to a further aspect of the present invention there is provided a shock absorber comprising:
a cylinder having an internal space formed therein and a piston arranged in the internal space for partitioning the internal space into a compression-side oil chamber and an extension-side oil chamber;
first, second, third and fourth oil chambers, wherein the first oil chamber is in communication with the extension-side oil chamber and the second oil chamber is in communication with the compression-side oil chamber;
a first valve arranged between the first oil chamber and the third oil chamber for allowing hydraulic oil to flow from the first oil chamber into the third oil chamber and restraining the hydraulic oil from flowing from the third oil chamber into the first oil chamber;
a second valve arranged between the second oil chamber and the third oil chamber for allowing the hydraulic oil to flow from the second oil chamber into the third oil chamber and restraining the hydraulic oil from flowing from the third oil chamber into the second oil chamber; and
a damping force generating valve arranged between the third oil chamber and the fourth oil chamber for allowing the hydraulic oil to flow from the third oil chamber into the fourth oil chamber and restraining the hydraulic oil from flowing from the fourth oil chamber into the third oil chamber, wherein the damping force generating valve is configured to generate a flowing resistance when the hydraulic oil flows from the third oil chamber into the fourth oil chamber.

The fourth oil chamber may be in selective communication with the compression-side oil chamber and the extension-side oil chamber.

The shock absorber may further comprise a third valve arranged between the first oil chamber and the fourth oil chamber for allowing the hydraulic oil to flow from the fourth oil chamber into the first oil chamber. The third valve may restrain or restrict the hydraulic oil from flowing from the first oil chamber into the fourth oil chamber.

The shock absorber may further comprise a fourth valve arranged between the second oil chamber and the fourth oil chamber for allowing the hydraulic oil to flow from the fourth oil chamber into the second oil chamber. The fourth valve may restrain or restrict the hydraulic oil from flowing from the second oil chamber into the fourth oil chamber.

The first valve and the second valve may be integrally formed.

The first valve and the second valve may comprise:
a cylindrical member having a first end surface formed with a first opening which communicates with the first oil chamber and a second end surface formed with a second opening which communicates with the second oil chamber;
a first valve element for opening and closing the first opening; and
a second valve element for opening and closing the second opening, wherein a side wall of the cylindrical member is formed with a third opening which opens toward the third oil chamber.

The first valve and the second valve may be formed separately.

The shock absorber may further comprise a first bypass route which connects the first oil chamber and the fourth oil chamber without going through the third valve. The shock absorber may comprise and a second bypass route which connects the second oil chamber and the fourth oil chamber without going through the fourth valve.

The shock absorber may further comprise a first opening-closing valve for opening and closing the first bypass route. The shock absorber may comprise a second opening-closing valve for opening and closing the second bypass route.

The damping force generating valve may comprise an electronically controlled valve which is able to change the flowing resistance.

The shock absorber may further comprise a reservoir connected to the fourth oil chamber.

According to a further aspect of the present invention there is provided a shock absorber comprising:
a cylinder having an internal space formed therein and a piston arranged in the internal space for partitioning the internal space into a compression-side oil chamber and an extension-side oil chamber;
a first oil chamber in communication with the extension-side oil chamber;
a second oil chamber in communication with the compression-side oil chamber;
a third oil chamber in selective communication with the first and second oil chambers;
a fourth oil chamber in selective communication with the third oil chamber, the extension-side oil chamber and the compression-side oil chamber; and
a damping force generating valve arranged between the third oil chamber and the fourth oil chamber and configured to generate a flowing resistance when the hydraulic oil flows from the third oil chamber into the fourth oil chamber.

Accordingly, oil flowing from, respectively, the compression and expansion side chambers during compression and expansion of the shock absorber will be communicated to the third oil chamber, and then to the fourth oil chamber via the damping force generating valve. Accordingly, damping may be achieved in both compression and extension stroking of the shock absorber.

The fourth oil chamber may be configured to communicate with the compression-side oil chamber when the first oil chamber is in communication with the third oil chamber. The fourth oil chamber may be configured to communicate with the extension-side oil chamber when the second oil chamber is in communication with the third oil chamber.

The fourth oil chamber may be configured to communicate with the extension-side oil chamber via the first oil chamber. The fourth oil chamber may be configured to communicate with the compression-side oil chamber via the second oil chamber.

The shock absorber may further comprise a non-return valve arrangement configured to permit selective communication between the different oil chambers. The non-return valve arrangement may comprise a plurality of non-return valves.

A vehicle according to the present invention may include a shock absorber according to any other aspect of the present invention.

According to the present invention, a shock absorber which is compact and is able to achieve a high damping force is realized.

### BRIEF DESCRIPTION OF THE DRAWINGS

These and other aspects of the present invention will now be described, by way of example only, with reference to the accompanying drawings, in which:
Fig. 1 is a schematic left side view of a motorcycle according to an embodiment of the present invention;
Fig. 2 shows a schematic configuration of a front-side shock absorber of the motorcycle of Fig. 1;
Fig. 3 shows a schematic configuration of a rear-side shock absorber of the motorcycle of Fig. 1;
Fig. 4 is a schematic control block diagram of the motorcycle;
Fig. 5 is an example of a stroke speed-damping force map;
Fig. 6 is a cross-sectional view of a rear suspension of the motorcycle of Fig. 1;
Fig. 7 is an enlarged cross-sectional view of a portion of the rear suspension of Fig. 6;
Fig. 8 is a cross-sectional view of a rear suspension according to a further embodiment of the present invention;
Fig. 9 is an enlarged cross-sectional view of a portion of the rear suspension shown in Fig. 8.
Fig. 10 is a cross-sectional view of a rear suspension according to another embodiment of the present invention; and
Fig. 11 is a cross-sectional view of a shock absorber disclosed in JP-A-05-018431.

### DETAILED DESCRIPTION OF THE DRAWINGS

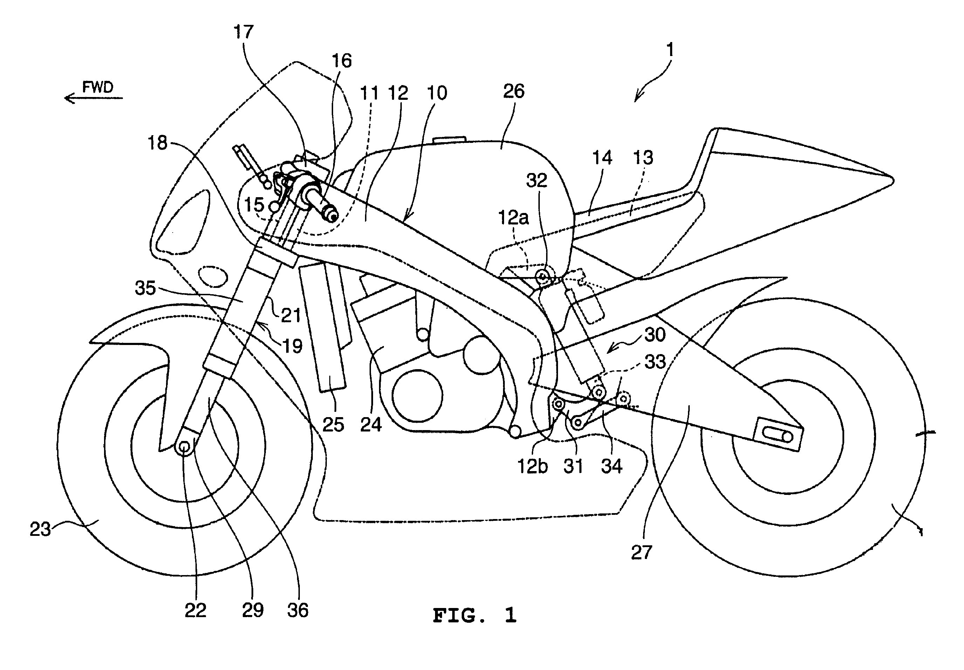

An example of one embodiment of the present invention will be described with reference to a motorcycle 1, which is a motorcycle in a so-called narrow sense, as shown in Fig. 1. However, a vehicle according to the present invention is not limited to the motorcycle in the narrow sense. The vehicle according to the present invention may be a four-wheeled vehicle or a saddle-type vehicle. The four-wheeled vehicle may include an off-road vehicle. The off-road vehicle is sometimes referred to as a side by side vehicle (Side × Side Vehicle).

The saddle-type vehicle may include a motorcycle, an ATV (All Terrain Vehicle) and the like. In this specification, the motorcycle means a motorcycle in the broad sense of the term. In other words, the motorcycle may include the motorcycle, a scooter, a mopped, an off-road vehicle and the like . In this specification, the motorcycle may also include a vehicle whose at least one of a front wheel and a rear wheel includes a plurality of wheels rotating integrally, and changes the direction of travel by inclining the vehicle.

In the description below, the directions front, rear, left, and right mean the directions viewed from a rider sitting upright on a seat 14. The term "FWD" in Fig. 1 and so on indicates the forward direction.

As shown in Fig. 1, the motorcycle 1 includes a vehicle body frame 10. The vehicle body frame 10 includes a head pipe 11, a main frame 12, and a seat rail 13. The main frame 12 extends from the head pipe 11 obliquely downward toward the rear. The seat rail 13 extends from a rear half portion of the main frame 12 slightly obliquely upward toward the rear. The seat 14 is arranged on the seat rail 13.

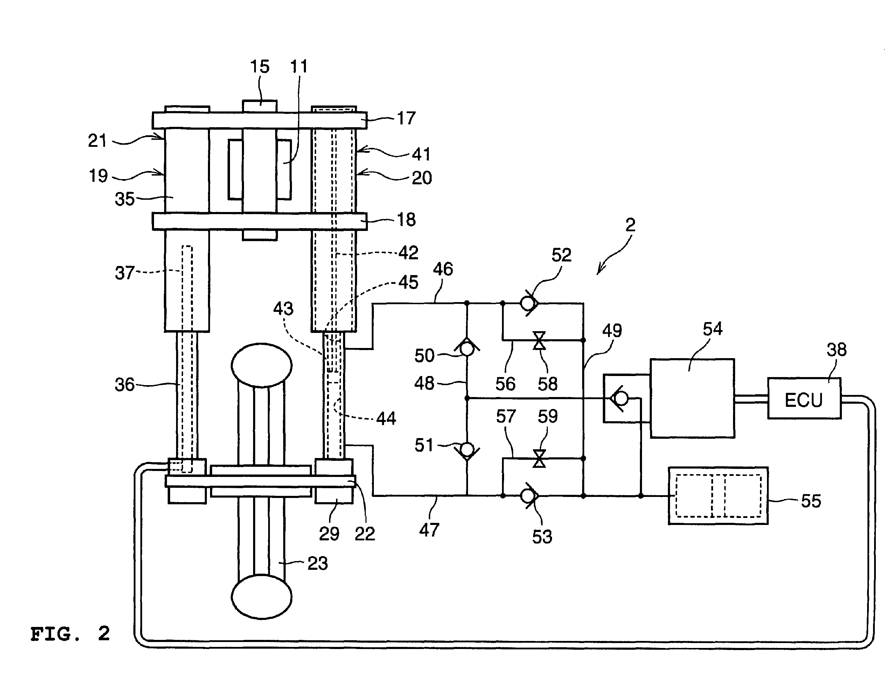

A steering shaft 15 is rotatably inserted into the head pipe 11. A handle 16 is attached to the upper end portion of the steering shaft 15. As shown in Fig. 2, an upper bracket 17 is attached to the upper end portion of the steering shaft 15. An under bracket 18 is attached to the lower end portion of the steering shaft 15.

A front fork 19 is attached to the upper bracket 17 and the under bracket 18. The front fork 19 includes a right front fork 20 and a left front fork 21 in pair. Axle brackets 29 are attached to the lower end portion of the right front fork 20 and the lower end portion of the left front fork 21, respectively. Bridged between both axle brackets 29 is an axle 22. A front wheel 23 is rotatably supported by the axle 22.

As shown in Fig. 1, an engine 24 is suspended from the main frame 12. A radiator 25 is arranged in front of the engine 24. A fuel tank 26 is arranged above the engine 24.

A pivot shaft, not shown, is attached to the main frame 12 behind the engine 24. A rear arm 27 is pivotally attached to the pivot shaft. A rear wheel 28 is rotatably supported at the rear end portion of the rear arm 27. The rear wheel 28 is connected to an output shaft of the engine 24 by a power transmission mechanism, not shown.

A rear suspension 30 is arranged between the main frame 12 and the rear arm 27. More specifically, a supporting portion 12a is provided at a midpoint of the main frame 12. An upper mounting portion 32 of the rear suspension 30 is attached to the supporting portion 12a. A supporting portion 12b is provided at the distal end portion of the main frame 12. A rocking member 31 is pivotally attached to the supporting portion 12b. A lower mounting portion 33 of the rear suspension 30 is attached to the supporting portion 12b. The rocking member 31 is connected to a midpoint of the rear arm 27 by a connecting member 34. Accordingly, the rear suspension 30 is extended and compressed by the pivotal movement of the rear arm 27.

As shown in Fig. 2, the front fork 19 is a so called telescopic type. The right front fork 20 and the left front fork 21 are respectively provided with an outer tube 35 and an inner tube 36. The outer tube 35 is attached to the upper bracket 17 and the under bracket 18. The axle bracket 29 is attached to the lower end portion of the inner tube 36. The inner tube 36 is inserted in the interior of the outer tube 35. The inner tube 36 is displaceable with respect to the outer tube 35 in both axial directions of the outer tube 35. The front fork 19 is extended by the inner tube 36 displaced axially downward with respect to the outer tube 35. In contrast, the front fork 19 is compressed by the inner tube 36 displaced axially upward with respect to the outer tube 35.

A detection unit 37 is arranged in the left front fork 21. The amount of extension and compression of the left front fork 21 is detected by the detection unit 37. In this embodiment, the detection unit 37 is composed of a stroke sensor. However, the detection unit 37 may be composed of sensors other than the stroke sensor. The arrangement and the mode of attachment of the detection unit 37 are also not specifically limited. For example, the detection unit 37 may be arranged in the right front fork 20 together with a front-side shock absorber 41.

The right front fork 20 includes the front-side shock absorber 41 of an oil type which is electronically controlled as shown in Fig. 2. The term "the shock absorber of the oil type" in this specification means a shock absorber using hydraulic oil. The term "shock absorber which is electronically controlled" means a shock absorber whose damping force characteristics are adjusted by being electronically controlled. In this embodiment, the front-side shock absorber 41 is controlled by an ECU (electronic control unit) 38.

The front-side shock absorber 41 includes the inner tube 36 described above, a rod 42, a piston 43, and a control valve assembly 2. The rod 42 is fixed to the outer tube 35 so as not to be displaceable. The piston 43 is connected to the lower end portion of the rod 42. The piston 43 is arranged in the inner tube 36 which constitutes a cylinder. The space in the interior of the inner tube 36 is partitioned into a compression-side main oil chamber 44 and an extension-side main oil chamber 45 by the piston 43. The compression-side main oil chamber 44 is positioned below the extension-side main oil chamber 45.

The control valve assembly 2 is connected to the compression-side main oil chamber 44 and the extension-side main oil chamber 45. The control valve assembly 2 includes a first oil chamber 46 and a second oil chamber 47. The first oil chamber 46 is connected to the extension-side main oil chamber 45. The second oil chamber 47 is connected to the compression-side main oil chamber 44.

In this embodiment, the term "oil chamber" means a space where the hydraulic oil is present. Therefore, the oil chamber includes not only a chamber where the hydraulic oil is present, but also a passage where the hydraulic oil is present. In other words, the shape of the oil chamber is not specifically limited.

The first oil chamber 46 and a third oil chamber 48 are connected via a first check valve 50. The first check valve 50 allows the hydraulic oil to flow from the first oil chamber 46 into the third oil chamber 48. The first check valve 50 restrains the hydraulic oil from flowing from the third oil chamber 48 into the first oil chamber 46.

The second oil chamber 47 and the third oil chamber 48 are connected via the second check valve 51. The second check valve 51 allows the hydraulic oil to flow from the second oil chamber 47 into the third oil chamber 48. The second check valve 51 restrains the hydraulic oil from flowing from the third oil chamber 48 into the second oil chamber 47. The first check valve 50 and the second check valve 51 may either be formed integrally or separately.

The third oil chamber 48 and a fourth oil chamber 49 are connected via an electronically controlled piston valve 54 as a control valve device. The piston valve 54 allows the hydraulic oil to flow from the third oil chamber 48 into the fourth oil chamber 49. The piston valve 54 restrains the hydraulic oil from flowing from the fourth oil chamber 49 into the third oil chamber 48. The piston valve 54 generates a flowing resistance to the hydraulic oil when the hydraulic oil flows from the third oil chamber 48 into the fourth oil chamber 49.

The magnitude of the flowing resistance that the piston valve 54 provides the hydraulic oil is electronically controlled. More specifically, the piston valve 54 is connected to the ECU 38. As described later, the magnitude of the flowing resistance that the piston valve 54 provides to the hydraulic oil is controlled by the ECU 38. In this embodiment, the piston valve 54 is composed of a solenoid valve. However, the piston valve 54 may be composed of valves other than the solenoid valve.

The fourth oil chamber 49 and the first oil chamber 46 are connected via a third check valve 52. The third check valve 52 allows the hydraulic oil to flow from the fourth oil chamber 49 into the first oil chamber 46. The third check valve 52 restrains the hydraulic oil from flowing from the first oil chamber 46 into the fourth oil chamber 49.

The first oil chamber 46 and the fourth oil chamber 49 are connected also by a first bypass route 56. A first opening-closing valve 58 is arranged in the first bypass route 56. The first opening-closing valve 58 opens and closes the first bypass route 56. By opening and closing the first opening-closing valve 58, adjustment of the channel area of the first bypass route 56 is achieved.

The fourth oil chamber 49 and the second oil chamber 47 are connected by a fourth check valve 53. The fourth check valve 53 allows the hydraulic oil to flow from the fourth oil chamber 49 into the second oil chamber 47. The fourth check valve 53 restrains the hydraulic oil from flowing from the second oil chamber 47 into the fourth oil chamber 49.

The second oil chamber 47 and the fourth oil chamber 49 are connected also by a second bypass route 57. A second opening-closing valve 59 is arranged in the second bypass route 57. The second opening-closing valve 59 opens and closes the second bypass route 57. By opening and closing the second opening-closing valve 59, adjustment of the channel area of the second bypass route 57 is achieved.

A reservoir 55 having a reservoir chamber filled with gas is connected to the fourth oil chamber 49.

When the right front fork 20 extends, the hydraulic oil flows from the extension-side main oil chamber 45 into the compression-side main oil chamber 44 via the first oil chamber 46, the first check valve 50, the third oil chamber 48, the piston valve 54, the fourth oil chamber 49, the fourth check valve 53, and the second oil chamber 47.

More specifically, when the right front fork 20 extends, the piston 43 moves upward with respect to the inner tube 36. Accordingly, the capacity of the extension-side main oil chamber 45 is reduced. Consequently, part of the hydraulic oil in the extension-side main oil chamber 45 flows into the first oil chamber 46. Here, the first check valve 50 allows the hydraulic oil to flow from the first oil chamber 46 into the third oil chamber 48. Therefore, the hydraulic oil flows into the third oil chamber 48 via the first check valve 50. In contrast, the third check valve 52 restrains the hydraulic oil from flowing from the first oil chamber 46 into the fourth oil chamber 49. Therefore, the hydraulic oil does not flow from the first oil chamber 46 into the fourth oil chamber 49.

The piston valve 54 allows the hydraulic oil to flow from the third oil chamber 48 into the fourth oil chamber 49. Therefore, the hydraulic oil flows from the third oil chamber 48 into the fourth oil chamber 49 via the piston valve 54. At this time, the piston valve 54 provides the flowing resistance to the hydraulic oil.

The fourth check valve 53 allows the hydraulic oil to flow from the fourth oil chamber 49 into the second oil chamber 47. Therefore, the hydraulic oil flows from the fourth oil chamber 49 into the compression-side main oil chamber 44 via the fourth check valve 53 and the second oil chamber 47.

The third check valve 52 allows the hydraulic oil to flow from the fourth oil chamber 49 into the first oil chamber 46. However, when the right front fork 20 extends, the hydraulic pressure in the first oil chamber 46 becomes relatively high. Therefore, the hydraulic oil flowing from the fourth oil chamber 49 into the first oil chamber 46 is restrained by the third check valve 52.

The second check valve 51 allows the hydraulic oil to flow from the second oil chamber 47 into the third oil chamber 48. However, when the right front fork 20 extends, the hydraulic pressure in the third oil chamber 48 becomes relatively high. Therefore, the hydraulic oil flowing from the second oil chamber 47 into the third oil chamber 48 is restrained by the second check valve 51.

When the right front fork 20 is compressed, the hydraulic oil flows from the compression-side main oil chamber 44 into the extension-side main oil chamber 45 via the second oil chamber 47, the second check valve 51, the third oil chamber 48, the piston valve 54, the fourth oil chamber 49, the third check valve 52, and the first oil chamber 46.

More specifically, when the right front fork 20 is compressed, the piston 43 moves downward with respect to the inner tube 36. Accordingly, the capacity of the compression-side main oil chamber 44 is reduced. Consequently, part of the hydraulic oil in the compression-side main oil chamber 44 flows into the second oil chamber 47. The second check valve 51 allows the hydraulic oil to flow from the second oil chamber 47 into the third oil chamber 48. Therefore, the hydraulic oil flows into the third oil chamber 48 via the second check valve 51. On the other hand, the fourth check valve 53 restrains the hydraulic oil from flowing from the second oil chamber 47 into the fourth oil chamber 49. Therefore, the hydraulic oil does not flow from the second oil chamber 47 into the fourth oil chamber 49.

The piston valve 54 allows the hydraulic oil to flow from the third oil chamber 48 into the fourth oil chamber 49. Therefore, the hydraulic oil flows from the third oil chamber 48 into the fourth oil chamber 49 via the piston valve 54. At this time, the piston valve 54 provides the flowing resistance to the hydraulic oil.

The third check valve 52 allows the hydraulic oil to flow from the fourth oil chamber 49 into the first oil chamber 46. Therefore, the hydraulic oil flows from the fourth oil chamber 49 into the extension-side main oil chamber 45 via the third check valve 52 and the first oil chamber 46.

The fourth check valve 53 allows the hydraulic oil to flow from the fourth oil chamber 49 into the second oil chamber 47. However, when the right front fork 20 is compressed, the hydraulic pressure in the second oil chamber 47 becomes relatively high. Therefore, the hydraulic oil flowing from the fourth oil chamber 49 into the second oil chamber 47 is restrained by the fourth check valve 53.

The first check valve 50 allows the hydraulic oil to flow from the first oil chamber 46 into the third oil chamber 48. However, when the right front fork 20 is compressed, the hydraulic pressure in the third oil chamber 48 becomes relatively high. Therefore, the hydraulic oil flowing from the first oil chamber 46 into the third oil chamber 48 is restrained by the first check valve 50.

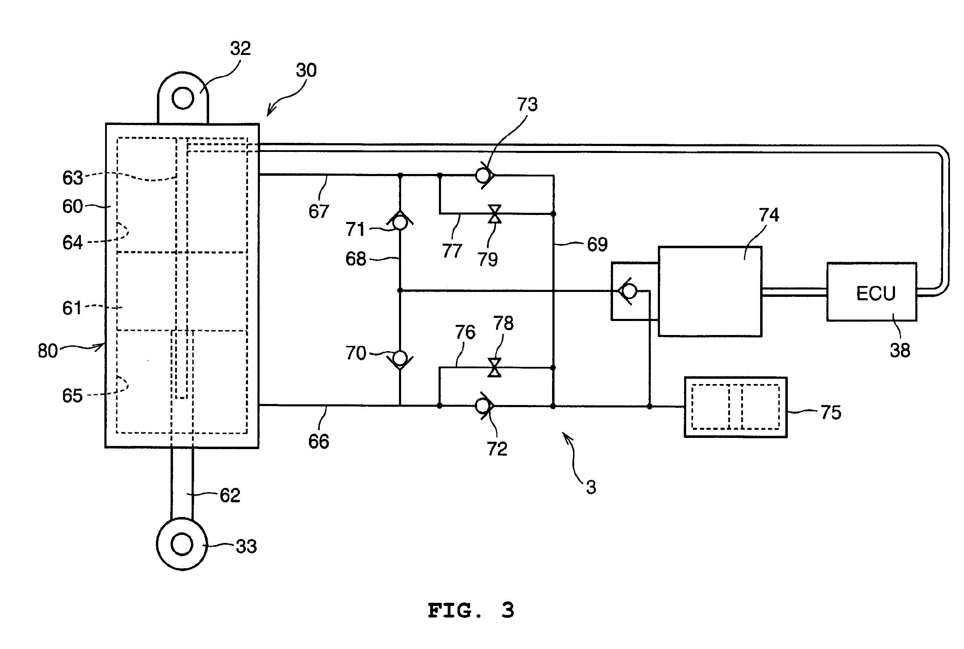

Fig. 3 shows a configuration of the rear suspension 30. The rear suspension 30 is provided with a rear-side shock absorber 80 of the oil type which is electronically controlled as shown in Fig. 3. The rear-side shock absorber 80 has a substantially similar configuration as the front-side shock absorber 41 described above.

More specifically, the rear-side shock absorber 80 includes a cylinder 60, a piston 61, a rod 62, and a control valve assembly 3. The cylinder 60 is provided with the upper mounting portion 32 connected to the supporting portion 12a shown in Fig. 1. The piston 61 is slidably arranged in the interior of the cylinder 60. The internal space in the cylinder 60 is partitioned into a compression-side main oil chamber 64 and an extension-side main oil chamber 65 by the piston 61. The compression-side main oil chamber 64 is arranged at a position higher than the extension-side main oil chamber 65. However, in the present invention, the arrangement or the like of the compression-side main oil chamber 64 and the extension-side main oil chamber 65 is not specifically limited.

The rod 62 extends downward from the piston 61. The lower mounting portion 33 to be connected to the supporting portion 12b shown in Fig. 1 is provided at the lower end portion of the piston 61.

A detection unit 63 is arranged in the rear-side shock absorber 80. The amount of extension and compression of the rear suspension 30 is detected by the detection unit 63. In this embodiment, the detection unit 63 includes a stroke sensor. However, the detection unit 63 may be composed of sensors other than the stroke sensor.

The control valve assembly 3 includes a first oil chamber 66 and a second oil chamber 67. The first oil chamber 66 is connected to the extension-side main oil chamber 65. The second oil chamber 67 is connected to the compression-side main oil chamber 64.

The first oil chamber 66 and a third oil chamber 68 are connected via a first check valve 70. The first check valve 70 allows the hydraulic oil to flow from the first oil chamber 66 into the third oil chamber 68. The first check valve 70 restrains the hydraulic oil from flowing from the third oil chamber 68 into the first oil chamber 66.

The second oil chamber 67 and the third oil chamber 68 are connected by a second check valve 71. The second check valve 71 allows the hydraulic oil to flow from the second oil chamber 67 into the third oil chamber 68. The second check valve 71 restrains the hydraulic oil from flowing from the third oil chamber 68 into the second oil chamber 67.

The third oil chamber 68 and a fourth oil chamber 69 are connected via an electronically controlled piston valve 74 as a damping force generating valve. The piston valve 74 allows the hydraulic oil to flow from the third oil chamber 68 into the fourth oil chamber 69. The piston valve 74 restrains the hydraulic oil from flowing from the fourth oil chamber 69 into the third oil chamber 68. The piston valve 74 generates a flowing resistance to the hydraulic oil when the hydraulic oil flows from the third oil chamber 68 into the fourth oil chamber 69.

The magnitude of the flowing resistance that the piston valve 74 provides to the hydraulic oil is electronically controlled. More specifically, the piston valve 74 is connected to the ECU 38. As described later, the magnitude of the flowing resistance that the piston valve 74 provides to the hydraulic oil is controlled by the ECU 38. The piston valve 74 is composed of a solenoid valve. However, the piston valve 74 may be composed of valves other than the solenoid valve.

The fourth oil chamber 69 and the first oil chamber 66 are connected via a third check valve 72. The third check valve 72 allows the hydraulic oil to flow from the fourth oil chamber 69 into the first oil chamber 66. The third check valve 72 restrains the hydraulic oil from flowing from the first oil chamber 66 into the fourth oil chamber 69.

The first oil chamber 66 and the fourth oil chamber 69 are connected also by a first bypass route 76. A first opening-closing valve 78 is arranged in the first bypass route 76. The first opening-closing valve 78 opens and closes the first bypass route 76. By opening and closing the first opening-closing valve 78, adjustment of the channel area of the first bypass route 76 is achieved.

The fourth oil chamber 69 and the second oil chamber 67 are connected by a fourth check valve 73. The fourth check valve 73 allows the hydraulic oil to flow from the fourth oil chamber 69 into the second oil chamber 67. The fourth check valve 73 restrains the hydraulic oil from flowing from the second oil chamber 67 into the fourth oil chamber 69.

The second oil chamber 67 and the fourth oil chamber 69 are connected also by a second bypass route 77. A second opening-closing valve 79 is arranged in the second bypass route 77. The second opening-closing valve 79 opens and closes the second bypass route 77. By opening and closing the second opening-closing valve 79, adjustment of the channel area of the second bypass route 77 is achieved.

A reservoir 75 is connected to the fourth oil chamber 69.

When the rear suspension 30 extends, the hydraulic oil flows from the extension-side main oil chamber 65 into the compression-side main oil chamber 64 via the first oil chamber 66, the first check valve 70, the third oil chamber 68, the piston valve 74, the fourth oil chamber 69, the fourth check valve 73, and the second oil chamber 67.

More specifically, when the rear suspension 30 extends, the piston 61 moves downward with respect to the cylinder 60. Accordingly, the capacity of the extension-side main oil chamber 65 is reduced. Consequently, part of the hydraulic oil in the extension-side main oil chamber 65 flows into the first oil chamber 66. Here, the first check valve 70 allows the hydraulic oil to flow from the first oil chamber 66 into the third oil chamber 68. Therefore, the hydraulic oil flows into the third oil chamber 68 via the first check valve 70. In contrast, the third check valve 72 restrains the hydraulic oil from flowing from the first oil chamber 66 into the fourth oil chamber 69. Therefore, the hydraulic oil does not flow from the first oil chamber 66 into the fourth oil chamber 69.

The piston valve 74 allows the hydraulic oil to flow from the third oil chamber 68 into the fourth oil chamber 69. Therefore, the hydraulic oil flows from the third oil chamber 68 into the fourth oil chamber 69 via the piston valve 74. At this time, the piston valve 74 provides the flowing resistance to the hydraulic oil.

The fourth check valve 73 allows the hydraulic oil to flow from the fourth oil chamber 69 into the second oil chamber 67. Therefore, the hydraulic oil flows from the fourth oil chamber 69 into the compression-side main oil chamber 64 via the fourth check valve 73 and the second oil chamber 67.

The third check valve 72 allows the hydraulic oil to flow from the fourth oil chamber 69 into the first oil chamber 66. However, when the rear suspension 30 extends, the hydraulic pressure in the first oil chamber 66 becomes relatively high. Therefore, the hydraulic oil flowing from the fourth oil chamber 69 into the first oil chamber 66 is restrained by the third check valve 72.

The second check valve 71 allows the hydraulic oil to flow from the second oil chamber 67 into the third oil chamber 68. However, when the rear suspension 30 extends, the hydraulic pressure in the third oil chamber 68 becomes relatively high. Therefore, the hydraulic oil flowing from the second oil chamber 67 into the third oil chamber 68 is restrained by the second check valve 71.

When the rear suspension 30 is compressed, the hydraulic oil flows from the compression-side main oil chamber 64 into the extension-side main oil chamber 65 via the second oil chamber 67, the second check valve 71, the third oil chamber 68, the piston valve 74, the fourth oil chamber 69, the third check valve 72, and the first oil chamber 66.

More specifically, when the rear suspension 30 is compressed, the piston 61 moves upward with respect to the cylinder 60. Accordingly, the capacity of the compression-side main oil chamber 64 is reduced. Consequently, part of the hydraulic oil in the compression-side main oil chamber 64 flows into the second oil chamber 67. The second check valve 71 allows the hydraulic oil to flow from the second oil chamber 67 into the third oil chamber 68. Therefore, the hydraulic oil flows into the third oil chamber 68 via the second check valve 71. In contrast, the fourth check valve 73 restrains the hydraulic oil from flowing from the second oil chamber 67 into the fourth oil chamber 69. Therefore, the hydraulic oil does not flow from the second oil chamber 67 into the fourth oil chamber 69.

The piston valve 74 allows the hydraulic oil to flow from the third oil chamber 68 into the fourth oil chamber 69. Therefore, the hydraulic oil flows from the third oil chamber 68 into the fourth oil chamber 69 via the piston valve 74. At this time, the piston valve 74 provides the flowing resistance to the hydraulic oil.

The third check valve 72 allows the hydraulic oil to flow from the fourth oil chamber 69 into the first oil chamber 66. Therefore, the hydraulic oil flows from the fourth oil chamber 69 into the extension-side main oil chamber 65 via the third check valve 72 and the first oil chamber 66.

The fourth check valve 73 allows the hydraulic oil to flow from the fourth oil chamber 69 into the second oil chamber 67. However, when the rear suspension 30 is compressed, the hydraulic pressure in the second oil chamber 67 becomes relatively high. Therefore, the hydraulic oil flowing from the fourth oil chamber 69 into the second oil chamber 67 is restrained by the fourth check valve 73.

Also, the first check valve 70 allows the hydraulic oil to flow from the first oil chamber 66 into the third oil chamber 68. However, when the rear suspension 30 is compressed, the hydraulic pressure in the third oil chamber 68 becomes relatively high. Therefore, the hydraulic oil flowing from the first oil chamber 66 into the third oil chamber 68 is restrained by the first check valve 70.

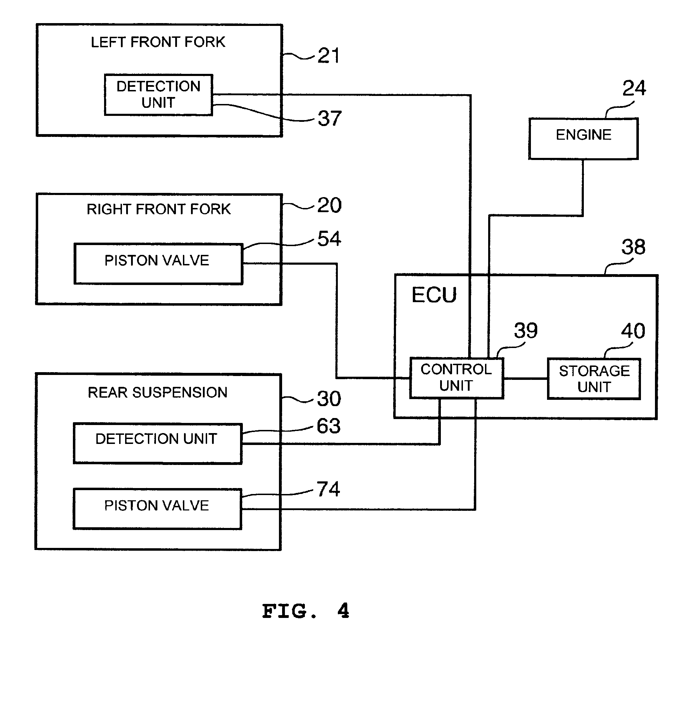

Referring now to Fig. 4, a control block for the front fork 19 and the rear suspension 30 will be described. As shown in Fig. 4, the motorcycle 1 includes the ECU 38 for controlling the output of the engine 24.

The detection unit 37 of the left front fork 21, the piston valve 54 of the right front fork 20, the detection unit 63 of the rear suspension 30, and the piston valve 74 are connected to a control unit 39 of the ECU 38. The control unit 39 is connected also to a storage unit 40.

The detection unit 37 of the right front fork 20 detects the amount of extension and compression of the left front fork 21. The detection unit 37 outputs the detected amount of extension and compression of the left front fork 21 to the control unit 39. The control unit 39 calculates the stroke speed of the left front fork 21 from the entered amount of extension and compression of the left front fork 21.

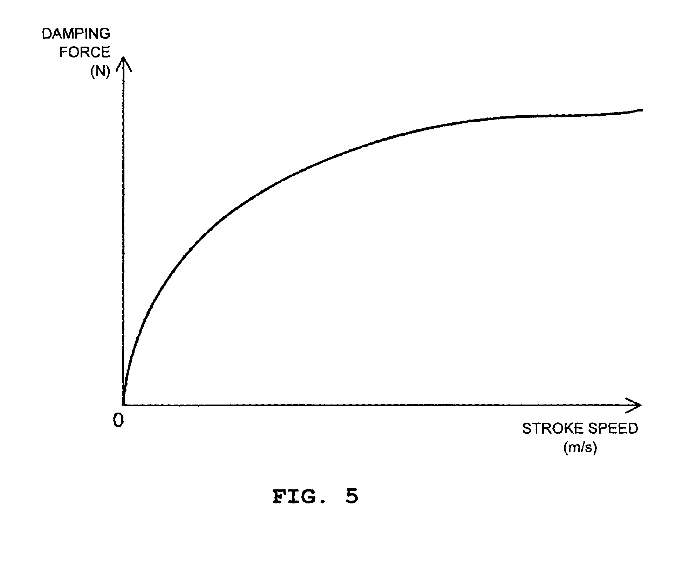

A map indicating the relation between the stroke speed and the damping force of the left front fork 21 as exemplified in Fig. 5 is stored in the storage unit 40. Hereinafter, the map indicating the relation between the stroke speed and the damping force may be referred to as a "stroke speed-damping force map".

The control unit 39 reads out the stroke speed-damping force map for the left front fork 21 from the storage unit 40. The control unit 39 calculates the damping force to be generated in the right front fork 20 by applying the calculated stroke speed of the left front fork 21 to the stroke speed-damping force map for the left front fork 21. The control unit 39 controls the piston valve 54 according to the magnitude of the calculated damping force. Accordingly, the magnitude of the damping force generated in the front fork 19 is adequately adjusted according to the stroke speed of the front fork 19. More specifically, the higher the stroke speed of the front fork 19 is, the larger the magnitude of the damping force generated in the front fork 19 becomes.

The detection unit 63 of the rear suspension 30 detects the amount of extension and compression of the rear suspension 30. The detection unit 63 outputs the detected amount of extension and compression of the rear suspension 30 to the control unit 39. The control unit 39 calculates the stroke speed of the rear suspension 30 from the entered amount of extension and compression of the rear suspension 30.

A stroke speed-damping force map for the rear suspension 30 is stored in the storage unit 40. The control unit 39 reads out the stroke speed-damping force map for the rear suspension 30 from the storage unit 40. The control unit 39 calculates the damping force to be generated in the rear suspension 30 by applying the calculated stroke speed of the rear suspension 30 to the stroke speed-damping force map for the rear suspension 30. The control unit 39 controls the piston valve 74 according to the magnitude of the calculated damping force. Accordingly, the magnitude of the damping force generated in the rear suspension 30 is adequately adjusted according to the stroke speed of the rear suspension 30. More specifically, the higher the stroke speed of the rear suspension 30 is, the larger the damping force generated in the rear suspension 30 becomes.

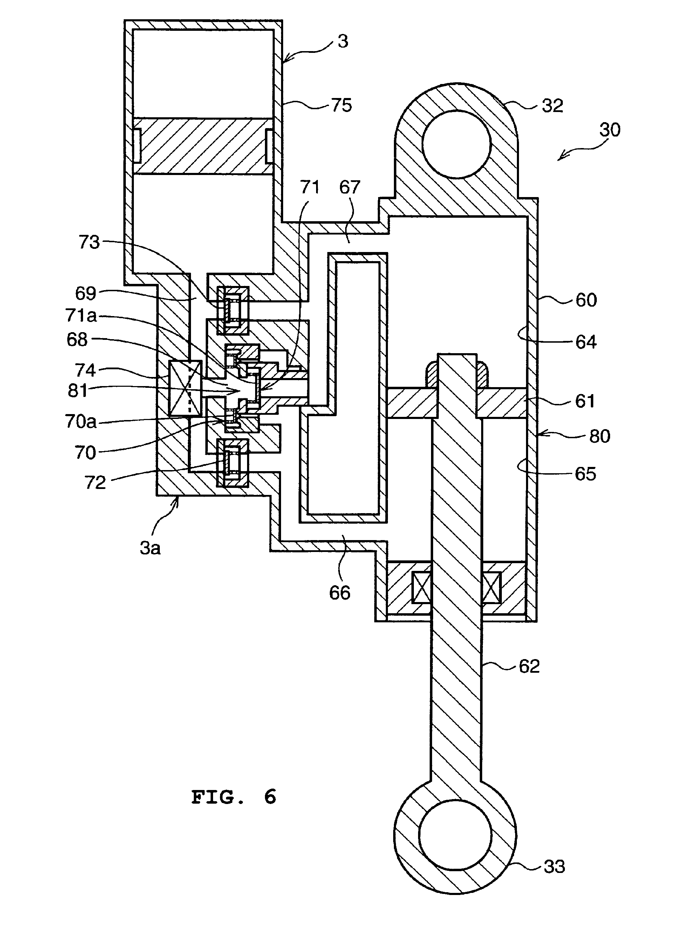

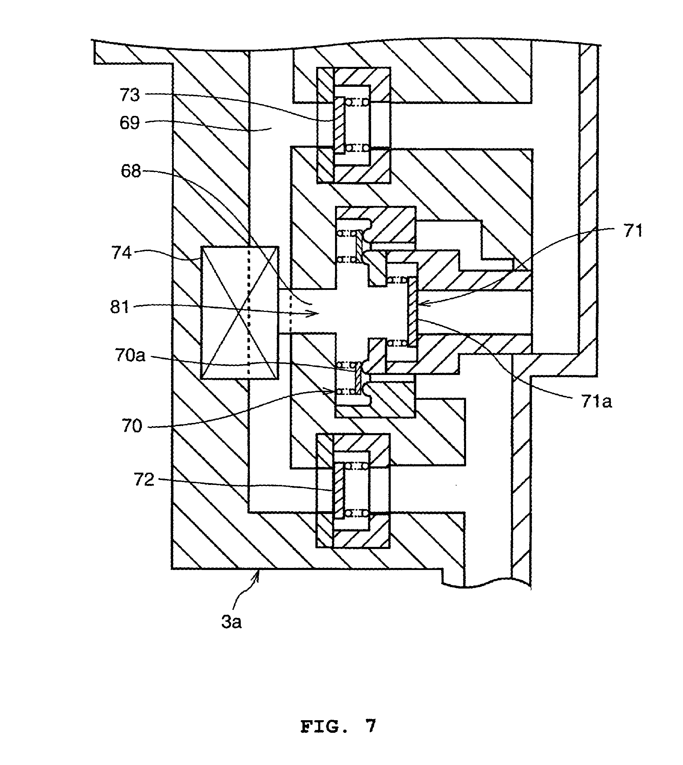

The specific shapes of the control valve assembly 2 and the control valve assembly 3 are not specifically limited. Referring now to Fig. 6 and Fig. 7, the specific shape of the control valve assembly 3 in this embodiment will be described in detail.

As shown in Fig. 6 and Fig. 7, the control valve assembly 3 includes an assembly body 3a. The assembly body 3a includes the first oil chamber 66, the second oil chamber 67, the third oil chamber 68, and the fourth oil chamber 69.

The third check valve 72 is arranged between the fourth oil chamber 69 and the first oil chamber 66. The fourth check valve 73 is arranged between the fourth oil chamber 69 and the second oil chamber 67. A valve member 81 is arranged between the first and second oil chambers 66, 67 and the third oil chamber 68. The valve member 81 includes the first check valve 70 and the second check valve 71 formed integrally. In this specification, the expression "the plurality of check valves are formed integrally" means that the plurality of check valves have at least a common oil chamber.

The valve member 81 includes a ring-shaped valve member 70a which constitutes part of the first check valve 70 and a disc-shaped valve member 71 a which constitutes part of the second check valve 71. The valve member 70a is arranged outside the valve member 71 a. The hydraulic oil flows from the first oil chamber 66 into the third oil chamber 68 by thrusting the valve member 70a away from an associated valve seat. The hydraulic oil flows from the second oil chamber 67 into the third oil chamber 68 by thrusting the valve member 71a away from an associated valve seat.

In the related art, an idea to provide a common control valve device for the compression side and the extension side is proposed. In this configuration, downsizing of the shock absorber in comparison with the case in which specific control valve devices are provided respectively for the compression side and the extension side is enabled.

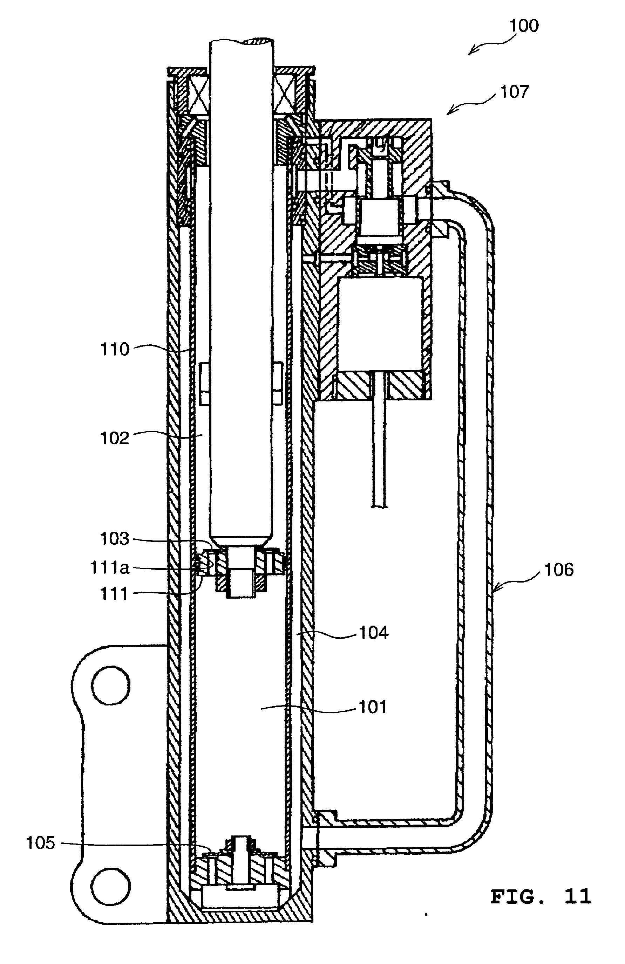

However, as shown in Fig. 11, in the shock absorber in the related art having only one control valve device, a communication hole for communicating the compression-side main oil chamber and the extension-side main oil chamber is normally formed in the piston. Therefore, in order to secure a sufficient flow rate of the hydraulic oil for compression, the piston and a piston rod tend to be upsized. Therefore, it is difficult to reduce the weight of the shock absorber and downsize the same sufficiently. There also arise problems such that the weight of the shock absorber is increased and necessity of enhancing the rigidity of the piston or the like arises.

In contrast, when the control valve devices are provided respectively for the compression side and the extension side, the sufficient flow rate of the hydraulic oil for the compression is achieved relatively easily. However, since a plurality of the control valve devices are necessary, the shock absorber tends to be upsized and increase in weight. Also, the manufacturing cost of the shock absorber tends to increase.

In contrast, in this embodiment, the hydraulic oil from the extension-side main oil chamber 45 (65) flows into the compression-side main oil chamber 44 (64) via the first oil chamber 46 (66), the first check valve 50 (70), the third oil chamber 48 (68), the piston valve 54 (74), the fourth oil chamber 49 (69), the fourth check valve 53 (73), and the second oil chamber 47 (67). The hydraulic oil from the compression-side main oil chamber 44 (64) flows into the extension-side main oil chamber 45 (65) via the second oil chamber 47 (67), the second check valve 51 (71), the third oil chamber 48 (68), the piston valve 54 (74), the fourth oil chamber 49 (69), the third check valve 52 (72), and the first oil chamber 46 (66). Therefore, it is not necessary to form the communication hole in the piston 43 (61). It is not necessary to provide a plurality of the piston valves 54 (74). Therefore, sufficient reduction of the weight and downsizing of the shock absorber are enabled. Also, cost reduction of the shock absorber is achieved.

For example, by reducing the channel area of the communication hole formed in the piston, downsizing of the piston can be achieved to some extent. However, in this case, the flow rate of the hydraulic oil tends to be low at the time of compression or extension of the shock absorber. Therefore, it is difficult to cause a sufficiently high damping force to be generated at both the time of compression and extension.

In contrast, in this embodiment, circulation of the hydraulic oil between the compression-side main oil chamber 44 (64) and the extension-side main oil chamber 45 (65) cannot be carried out via the piston 43 (61). Therefore, even when the piston 43 (61) is sufficiently downsized, a large flow rate of the hydraulic oil is secured for both the compression and extension. Therefore, according to the shock absorber 41 (80) in this embodiment, a high damping force is generated for both the compression and extension.

In other words, in this embodiment, generation of the high damping force is achieved for both the compression and extension, and realization of the sufficiently compact shock absorber 41 (80) is achieved.

The shock absorber 41 (80) in this embodiment may be used for vehicles other than the motorcycle. However, the shock absorber 41 (80) in this embodiment which achieves the downsizing is suitable for saddle-type vehicles in which the space for arranging the shock absorber is limited, in particular, for the motorcycle.

By employing the electronically controlled piston valve 54 (74) as the damping force generating valve as in this embodiment, the damping force is electronically controlled for both the compression and the extension.

In general, the electronically controlled piston valve has a large size in comparison with a mechanical piston valve, which is not electronically controlled. Therefore, the technology of this embodiment in which the number of required piston valves is small is specifically effective for the electronically controlled shock absorber.

In the shock absorber having only one piston valve, it is difficult to provide bypass routes for both the extension side and the compression side. In contrast, in this embodiment, the return routes of the hydraulic oil from the piston valve 54 (74) are different from each other between the extension and the compression. Therefore, the bypass routes may be provided for both the extension side and the compression side. Therefore, individual adjustment of the flow rate of the hydraulic oil at the time of extension and the flow rate of the hydraulic oil at the time of compression is achieved respectively easily.

The first check valve 50 (70) and the second check valve 51 (71) may be formed integrally, and may be formed separately. By forming the first check valve 50 (70) and the second check valve 51 (71) integrally with respect to each other, further downsizing of the shock absorber is achieved.

In contrast, by forming the first check valve 50 (70) and the second check valve 51 (71) separately, the configurations of the first check valve 50 (70) and the second check valve 51 (71) may be simplified respectively. Therefore, manufacture of the shock absorber is facilitated. Also, cost reduction of the shock absorber is achieved.

Also, the flexibility of setting of the respective characteristics of the first check valve 50 (70) and the second check valve 51 (71) is enhanced. For example, it is also possible to differentiate the characteristic of the first check valve 50 (70) and the characteristic of the second check valve 51 (71) significantly.

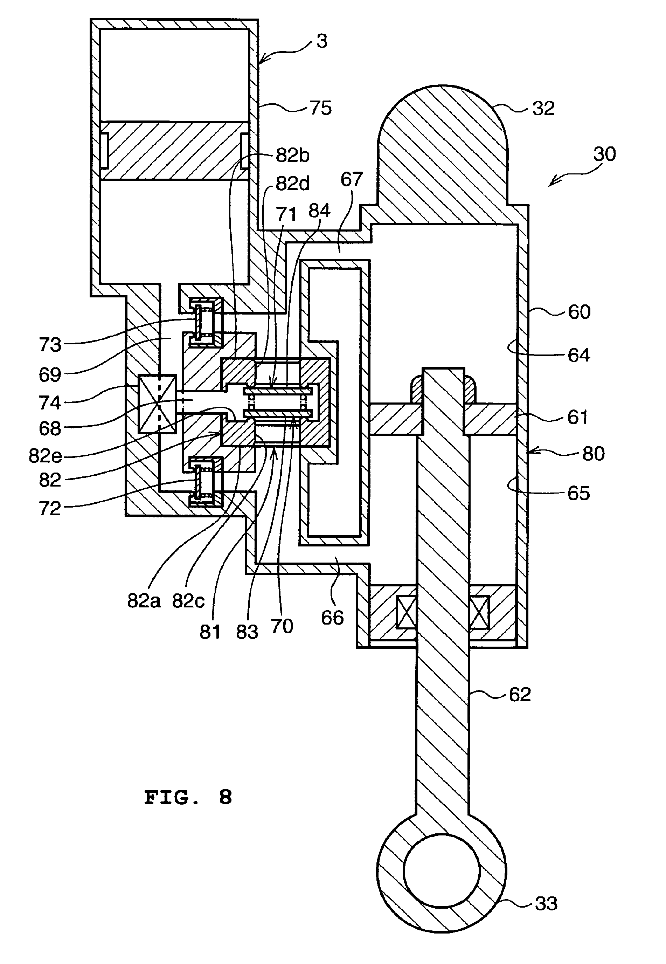

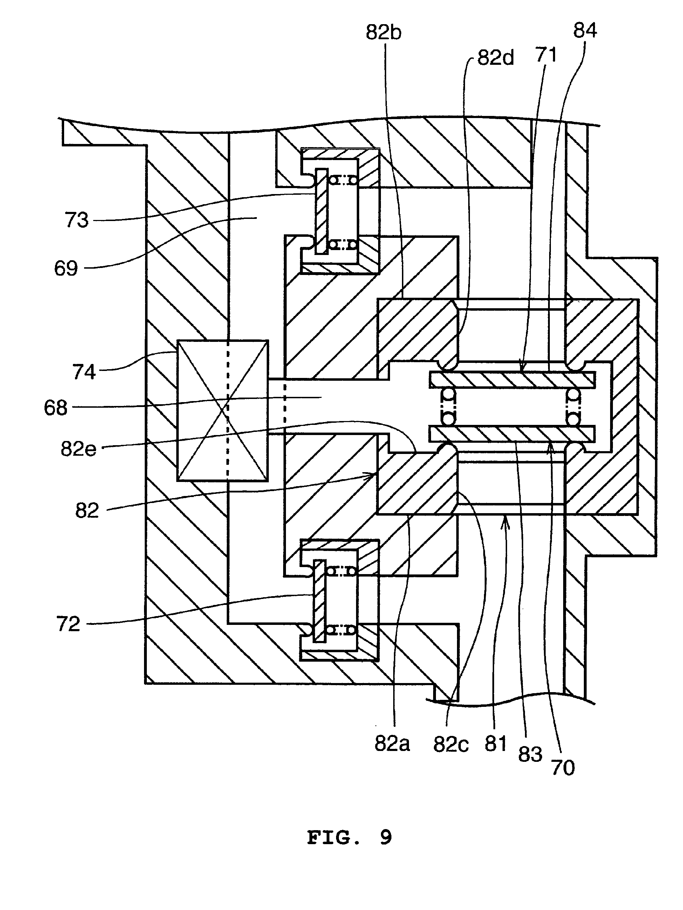

Fig. 8 is a cross-sectional view of a rear suspension 30 according to a modified embodiment. Fig. 9 is a partly enlarged cross-sectional view of the rear suspension 30 in this modification. As shown in Fig. 8 and Fig. 9, in this modification, the valve member 81 includes a cylindrical member 82, a first valve element 83 which constitutes part of the first check valve 70, and a second valve element 84 which constitutes part of the second check valve 71.

The cylindrical member 82 includes a first end surface 82a and a second end surface 82b. A first opening 82c is formed on the first end surface 82a. The first opening 82c opens toward the first oil chamber 66. The first valve element 83 opens and closes the first opening 82c. A second opening 82d is formed on the second end surface 82b. The second opening 82d opens toward the second oil chamber 67. The second valve element 84 opens and closes the second opening 82d. A third opening 82e is formed on a side wall of the cylindrical member 82. The third opening 82e opens toward the third oil chamber 68.

According to this modification, the surface area of the first opening 82c and the surface area of the second opening 82d may be adjusted relatively freely. Therefore, the flexibility of setting of the damping force at the time of the extension and the damping force at the time of the compression may respectively be enhanced.

Also, it is substantially easy to equalize the surface area of the first opening 82c and the surface area of the second opening 82d. Therefore, the damping force at the time of the extension and the damping force at the time of the compression may substantially be equalized.

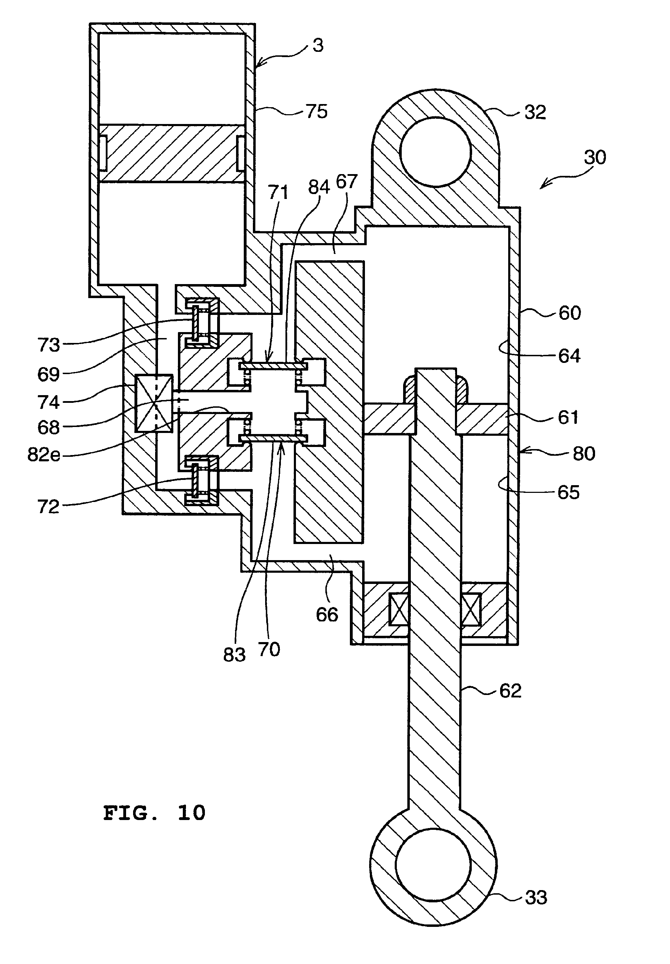

Fig. 10 is a cross-sectional view of a rear suspension 30 according to a further modified embodiment. In the embodiments described above, the example in which the first check valve 70 and the second check valve 71 are integrally formed has been described. However, in the present invention, the first check valve 70 and the second check valve 71 may not be formed integrally. As shown in Fig. 10, the first check valve 70 and the second check valve 71 may be formed separately. By providing the first check valve 70 and the second check valve 71 separately, the flexibility of setting of the first check valve 70 and the second check valve 71 may further be enhanced.

In the embodiment shown above, the example in which the front-side shock absorber 41 and the rear-side shock absorber 80 are both provided has been described. However, it is also possible to provide only one of the front-side shock absorber 41 and the rear-side shock absorber 80.

In this embodiment, the example in which the electronically controlled piston valve is employed as the damping force generating valve has been described. However, the damping force generating valve is not specifically limited as long as it provides the flowing resistance to the passing hydraulic oil. The damping force generating valve does not have to be electronically controlled. The damping force generating valve may be, for example, a mechanical valve. The damping force generating valve may not be the piston valve.

### Reference Numerals

- 1: motorcycle
- 36: inner tube (cylinder)
- 60: cylinder
- 41: front-side shock absorber (shock absorber)
- 43,61: piston
- 44, 64: compression-side main oil chamber
- 45, 65: extension-side main oil chamber
- 46, 66: first oil chamber
- 47, 67: second oil chamber
- 48, 68: third oil chamber
- 49, 69: fourth oil chamber
- 50, 70: first check valve (first valve)
- 51, 71: second check valve (second valve)
- 52, 72: third check valve (third valve)
- 53, 73: fourth check valve (fourth valve)
- 54, 74: piston valve (damping force generating valve)
- 55, 75: reservoir
- 56, 76: first bypass route
- 57, 77: second bypass route
- 80: rear-side shock absorber (shock absorber)
- 82: cylindrical member
- 82a: first end surface
- 82b: second end surface
- 82c: first opening
- 82d: second opening
- 82e: third opening
- 83: first valve element
- 84: second valve element

## Claims

1. A shock absorber (41) comprising:
a cylinder having an internal space formed therein and a piston (43) arranged in the internal space for partitioning the internal space into a compression-side oil chamber (44) and an extension-side oil chamber (45);
first, second, third and fourth oil chambers (46, 47, 48, 49), wherein the first oil chamber (46) is in communication with the extension-side oil chamber (45) and the second oil chamber (47) is in communication with the compression-side oil chamber (44);
a first valve (50) arranged between the first oil chamber (46) and the third oil chamber (48) for allowing hydraulic oil to flow from the first oil chamber (46) into the third oil chamber (48) and restraining the hydraulic oil from flowing from the third oil chamber (48) into the first oil chamber (46);
a second valve (51) arranged between the second oil chamber (47) and the third oil chamber (48) for allowing the hydraulic oil to flow from the second oil chamber (47) into the third oil chamber (48) and restraining the hydraulic oil from flowing from the third oil chamber (48) into the second oil chamber (47); and
a damping force generating valve (54) arranged between the third oil chamber (48) and the fourth oil chamber (49) for allowing the hydraulic oil to flow from the third oil chamber (48) into the fourth oil chamber (49) and restraining the hydraulic oil from flowing from the fourth oil chamber (49) into the third oil chamber (48), wherein the damping force generating valve (54) is configured to generate a flowing resistance when the hydraulic oil flows from the third oil chamber (48) into the fourth oil chamber (49).

2. The shock absorber (41) according to Claim 1, wherein the fourth oil chamber (49) is in selective communication with the compression-side oil chamber (44) and the extension-side oil chamber (45).

3. The shock absorber (41) according to Claim 1 or 2, further comprising:
a third valve (52) arranged between the first oil chamber (46) and the fourth oil chamber (49) for allowing the hydraulic oil to flow from the fourth oil chamber (49) into the first oil chamber (46), and restraining the hydraulic oil from flowing from the first oil chamber (46) into the fourth oil chamber (49); and
a fourth valve (53) arranged between the second oil chamber (47) and the fourth oil chamber (49) for allowing the hydraulic oil to flow from the fourth oil chamber (49) into the second oil chamber (47), and restraining the hydraulic oil from flowing from the second oil chamber (47) into the fourth oil chamber (49).

4. The shock absorber (41) according to Claim 1, 2 or 3, wherein the first valve (50) and the second valve (51) are formed integrally.

5. The shock absorber (80) according to Claim 4, wherein the first valve (70) and the second valve (71) comprise a cylindrical member (82) having a first end surface (82a) formed with a first opening (82c) which communicates with the first oil chamber (46) and a second end surface (82b) formed with a second opening (82d) which communicates with the second oil chamber (47), a first valve element (83) for opening and closing the first opening (82c), and a second valve element (84) for opening and closing the second opening (82d), wherein a side wall of the cylindrical member (82) is formed with a third opening (82e) which opens toward the third oil chamber (48).

6. The shock absorber (41) according to Claim 1, 2 or 3, wherein the first valve (50) and the second valve (51) are formed separately.

7. The shock absorber (41) according to any one of Claims 3 to 6, further comprising a first bypass route (56) which connects the first oil chamber (46) and the fourth oil chamber (49) without going through the third valve (52), and a second bypass route (57) which connects the second oil chamber (47) and the fourth oil chamber (49) without going through the fourth valve (53).

8. The shock absorber (41) according to Claim 7, further comprising a first opening-closing valve (58) for opening and closing the first bypass route (56), and a second opening-closing valve (59) for opening and closing the second bypass route (57).

9. The shock absorber (41) according to any preceding Claim, wherein the damping force generating valve (54) comprises an electronically controlled valve which is able to change the flowing resistance.

10. The shock absorber (41) according to any preceding Claim, further comprising a reservoir (55) connected to the fourth oil chamber (49).

11. A shock absorber (41) comprising:
a cylinder having an internal space formed therein and a piston (43) arranged in the internal space for partitioning the internal space into a compression-side oil chamber (44) and an extension-side oil chamber (45);
a first oil chamber (46) in communication with the extension-side oil chamber (45);
a second oil chamber (47) in communication with the compression-side oil chamber (44);
a third oil chamber (48) in selective communication with the first and second oil chambers (46, 47);
a fourth oil chamber (49) in selective communication with the third oil chamber (48), the extension-side oil chamber (45) and the compression-side oil chamber (44); and
a damping force generating valve (54) arranged between the third oil chamber (48) and the fourth oil chamber (49) and configured to generate a flowing resistance when the hydraulic oil flows from the third oil chamber (48) into the fourth oil chamber (49).

12. The shock absorber (41) according to Claim 11, wherein the fourth oil chamber (49) is configured to communicate with the compression-side oil chamber (44) when the first oil chamber (46) is in communication with the third oil chamber (48), and the fourth oil chamber (49) is configured to communicate with the extension-side oil chamber (45) when the second oil chamber (47) is in communication with the third oil chamber (48).

13. The shock absorber (41) according to Claim 11 or 12, wherein the fourth oil chamber (49) is configured to communicate with the extension-side oil chamber (45) via the first oil chamber (46), and is configured to communicate with the compression-side oil chamber (44) via the second oil chamber (47).

14. The shock absorber (41) according to Claim 11, 12 or 13, further comprising a non-return valve arrangement configured to permit selective communication between the different oil chambers.

15. A vehicle (1) comprising a shock absorber (41) according to any preceding Claim.
